# EUROPEAN PATENT SPECIFICATION

(11) **EP 1 237 702 B1**
(45) Date of publication and mention of the grant of the patent: **28.04.2004**
(21) Application number: 00979840.6
(22) Date of filing: 05.12.2000
(51) Int. Cl.: B29C 45/16, B29C 45/80

(54) **CONTROLLING AN INJECTION MOULDING MACHINE HAVING A MOULD AND AT LEAST TWO INJECTION UNITS**
STEUERUNG EINER SPRITZGIESSMASCHINE MIT EINEM WERKZEUG UND ZUMINDEST ZWEI EINSPRITZEINHEITEN
COMMANDE D'UNE MACHINE A INJECTER PRESENTANT UN MOULE ET AU MOINS DEUX UNITES D'INJECTION

(30) Priority: 08.12.1999 CH 225399
(43) Date of publication of application: 11.09.2002
(73) Proprietor: Plabber Holding S.A., 1449 Luxembourg (LU)
(72) Inventor: Orru, Enrico Giovanni, 98000 Monte-Carlo (MC)
(74) Representative: Jacobacci, Guido
(86) International application number: PCT/IB2000/001804
(87) International publication number: WO 2001/041996

(56) References cited:
- EP-A- 0 475 063
- EP-A- 0 805 070
- DE-A- 19 808 145
- US-A- 4 335 068
- US-A- 4 778 368
- PATENT ABSTRACTS OF JAPAN vol. 1997, no. 09, 30 September 1997 (1997-09-30) & JP 09 117938 A (MITSUBISHI MATERIALS CORP), 6 May 1997 (1997-05-06)

## Description

The present invention relates to an auxiliary injection unit for moulds for moulding articles of at least two parts from plastics material as disclosed in the preamble of appended claim 1.

Nowadays, it is known for articles of plastics material to be manufactured by moulding at least two components, having different characteristics, according to the following method.

The main component, distinguished by its greater volume or weight, is injection-moulded first, in a prepared main mould, by means of machines, such as a press, provided for injecting the plastics material.

Meanwhile, an auxiliary unit, or injector can be wired into an appropriate connection, ready to mould a second component in a separate injection step.

Up to now, the said auxiliary unit requires electric and/or electrodynamic signals from the said press in order to operate.

This involves a considerable disadvantage in that the said presses must be electrically connected to the said injector, meaning that an operator is obliged to work on the press to modify the electrical circuit.

It is therefore necessary to employ a qualified technician with a good knowledge of the structure of the press.

Another disadvantage lies in the waste of time caused by the said electrical interconnection operation, a waste of time which involves an unnecessary and economically damaging immobilisation of the press.

EP-A-0 805 870 describes a moulding assembly including a mould for moulding articles of plastic material made of a single injection unit, wherein the mould comprises movable parts operable to adapt the mould cavity for injection by the injection unit, which movable parts are connected to a control unit which is operable to control the injection unit.

US-A-4 335 068 describes a mould defining a moulding space divided into two subspaces which are defined by retractable partitioned walls and including two injection units for the separate injection of the plastics material into said two sub-spaces.

The main purpose of the present invention is therefore to solve the technical problems described above, eliminating the disadvantages described with reference to the prior art and thus provide an auxiliary injection unit which operates independently of the type of press used.

In the context of the above task, another important object is to provide a unit which achieves the main purpose simply and rapidly, without any need for frequent adjustments.

Last but not least, the unit must be structurally simple and relatively inexpensive to manufacture.

The main purpose and the other referred to are achieved, along with other which will become apparent later, by providing an auxiliary injection unit for a mould for moulding articles of plastics material according to the features disclosed in the characterising part of appended claim 1.

Preferred embodiments are disclosed in the appended dependent claims.

Further characteristics and advantages of the invention will become apparent from the detailed description of one embodiment thereof, illustrated purely by way of non-limitative example in the appended drawings, in which:
Figure 1 is a three-quarters view of the unit of the invention connected to a mould;
Figure 2 is a block diagram of the electrical connections relating to the microswitches used;

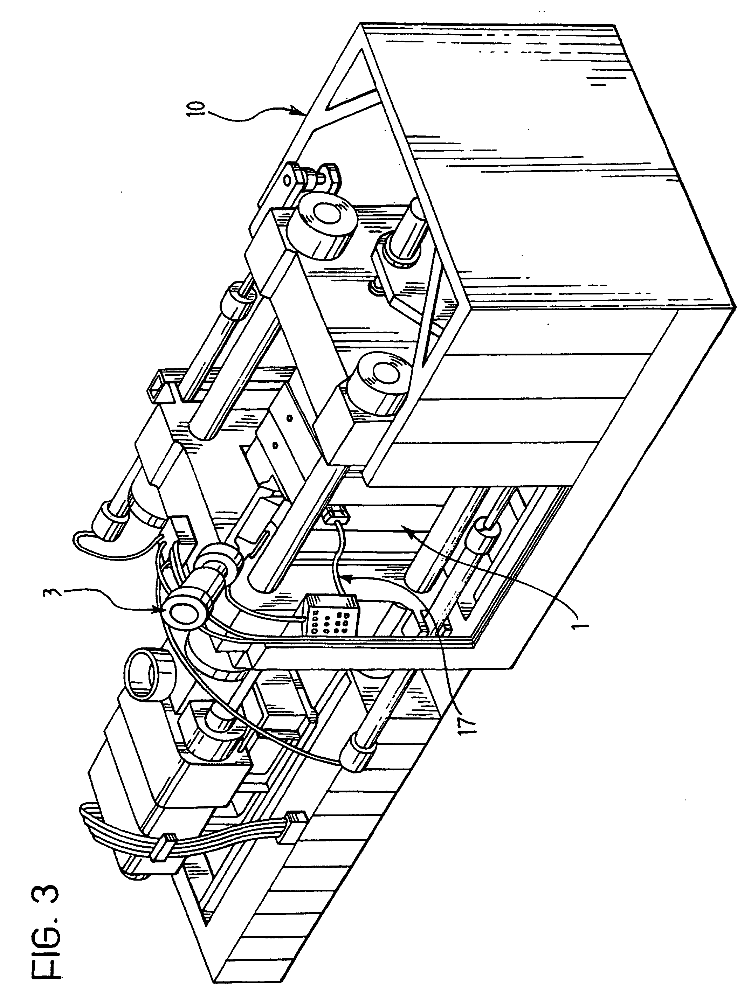

Figure 3 is a three-quarters view of the overall structure: including a press, a mould and the invention;
Figure 4 is a section, taken on a first section plane, of the mould containing the microswitches after the first component has been injected;
Figure 5 is a section, taken on another section plane, of the unit of the invention connected to the mould after the injection of the second component.

With reference to the aforesaid drawings, a mould is indicated 1 for the injection-moulding in plastics material of a first component 2, having an auxiliary unit, indicated 3, connected thereto for the separate injection of a second component 4.

Three detectors are arranged in the said mould 1, three microswitches, for example.

A first detector, indicated 5, is associated with the forward movement of a blade assembly indicated 6.

The said blade assembly 6 comprises a mechanism for managing the geometry of the mould, in particular in the area indicated 7, between the injection of the first component 2 and the injection of the second component 4.

In particular, it is in this area 7 that contact occurs between a first path 8, for the said first component 2, and a second path 9, for the second component 4.

The forward movement of the said blade assembly 6 interrupts the connection between the said first path 8 and the said second path 9, so that the said first component 2 only has access to the area of the mould 1 involved with it.

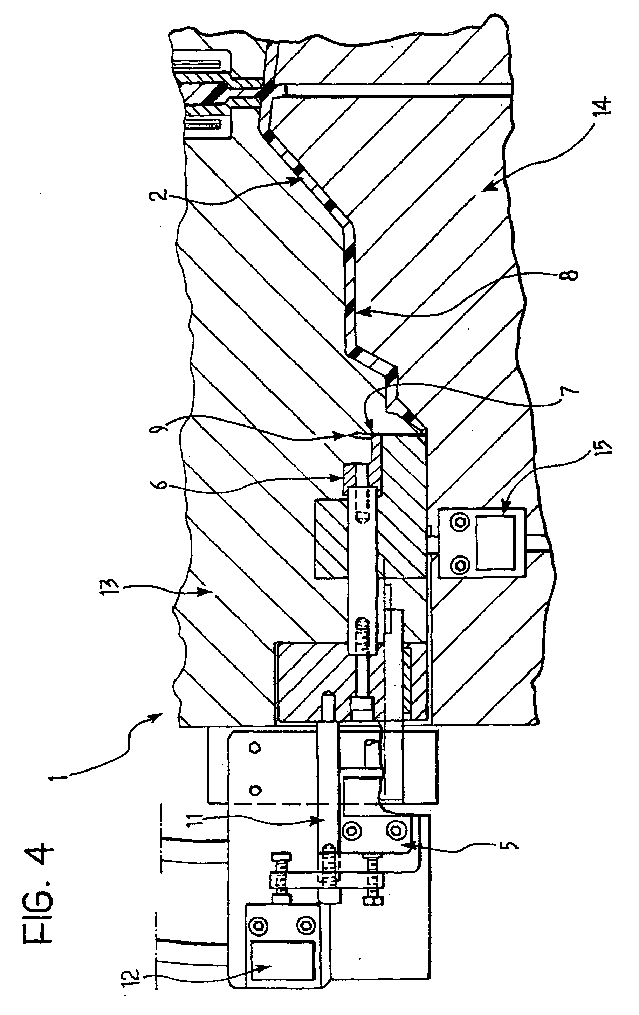

When the said blade assembly 6 is advanced, the first detector 5 is activated, permitting a press, indicated 10, to inject the said first component 2 (see Figure 4).

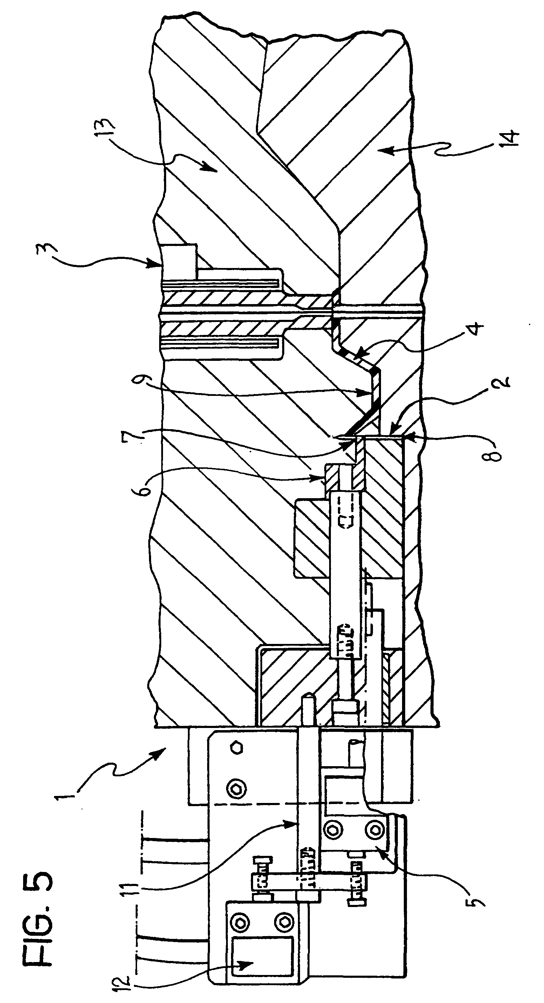

A T-shape arm, indicated 11, is provided to synchronise the movement of the blade assembly 6 with the activation or non-activation of a second detector 12, in such a way that when the blade assembly 6 is withdrawn, as shown in Figure 5, the said second detector 12 is activated in its closed position following the opening of the said first detector 5.

In this way, the said second detector 12 closes its respective circuit when the said blade assembly 6 is withdrawn, enabling the second path 9 to communicate with the said first path 8 and permitting the activation of the auxiliary unit 3.

A third detector 15 is arranged at the point where the plug, indicated 14, meets the die, indicated 13, of the said mould 1.

The said third detector 15 is activated when the two parts of the said mould 1, the plug 14 and the die 13, close together, thereby permitting operation of both the press and the auxiliary unit.

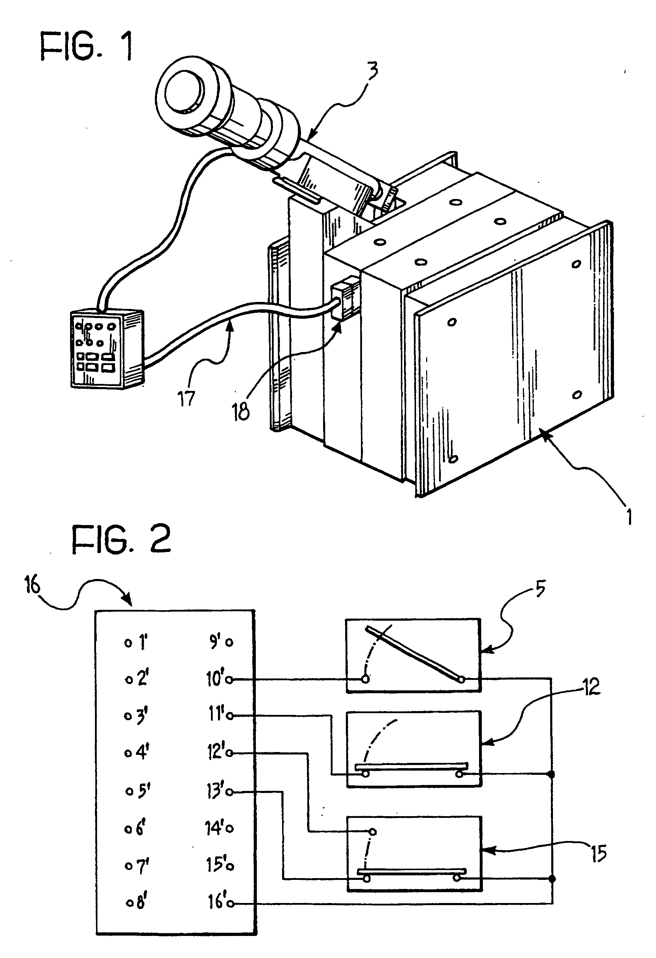

The said first, second and third detectors are connected, as illustrated in the diagram of Figure 2, to a sixteen-pin connector, indicated 16, arranged on the external surface of the mould 1, and are part of three independent circuits, as shown in Figure 2.

These circuits may be identified by the reference numbers of each pin (contact) in the following way: the first detector 5 closes the circuit between the pins indicated 10' and 16', permitting injection by the said press 10; the second detector 12 closes the circuit between the pins 11' and 16', permitting injection by the auxiliary unit 3; the third detector 15 closes the circuit between the pins 12' and 16' when the mould is closed, while it closes the circuit between the pins 13' and 16 when the mould is open.

The said auxiliary unit 3 can be connected to the said connector 16 by means of a cable, indicated 17, through a sixteen-pin connector indicated 18.

Operation is therefore as follows: with reference to the appended drawings, the moulding operation begins with the mould 1 closed and thus with the circuit closed between the pins 12' and 16', associated with the third detector 15, and with the blade assembly 6 advanced and the first detector 5 closed.

In this way, the second detector 12 remains open since the second component 4 is injected only once injection of the first component 2 has been completed.

Once the press 10 has been started to inject the first component 2, at the end of this step the blade assembly 6 is withdrawn, thus altering the area 7 of the press 1 so that the second path 9 is in communication with the first component 2, which during the preceding step occupied the path 8.

As a result of this withdrawal, the T-shape arm 11, which is securely fixed to the blade assembly 6, opens the first detector 5 and closes the second detector 12.

This closes the circuit between the pins 11' and 16', signalling consent for the auxiliary unit 3 to inject the second component 4.

The mould is then opened in order to extract the workpiece, thus activating the third detector 15 which closes the circuit between the pins 13' and 16', giving to the auxiliary unit 3 a signal for resetting the cycle.

It can thus be appreciated that the invention has achieved its object and aims, by providing an auxiliary injection unit which is controlled directly by the movement of the parts of the mould during the moulding steps, with no need for intervention on the press.

The materials used and the dimensions of individual components of the unit of the invention can of course be adapted to the specific requirements of each case.

## Claims

1. A moulding apparatus for moulding articles of plastics material, comprising:
- a mould(1) with a plug member (14) and a die member (13) defining a mould cavity (8, 9), said mould being connectable to a main injection moulding press (10) for injecting into said cavity a first plastics component (2), and
- an associated auxiliary injection unit (3) for the separate injection of a second plastics component (4) into said mould cavity, said mould including associated movable parts (6) for modifying the geometry of said cavity in the area (7) between the injection of the first component (2) and the injection of the second component (4),
**characterised in that** said mould (1) contains one or more detectors (5, 12, 15) for detecting the position of said movable parts (6) operable to adapt the mould for injection by said auxiliary unit (3), said one or more detectors being wired to a connector (16) which is interconnectable to said auxiliary unit (3) and operable to give consent to the activation of the latter.

2. A moulding apparatus according to claim 1, **characterised in that** it includes a first detector (5) arranged inside said mould (1) and associated with the forward movement of a blade assembly (6) forming part of said mould.

3. A moulding apparatus according to claim 2, **characterised in that** said blade assembly (6) consists of a mechanism operable to change the geometry of a particular region of the mould cavity, after the injection of said first component (2) and before the injection of said second component (4) by means of said auxiliary unit (3).

4. A moulding apparatus according to claim 3, **characterised in that** said region of the mould is located where a first path (8) for said first component (2) comes into contact with a second path (9) for said second component (4).

5. A moulding apparatus according to claim 4, **characterised in that** the forward movement of said blade assembly (16) interrupts the connection between said first (8) and second paths (9), so that said first component (2) has access only to the region of the mould intended for it.

6. A moulding apparatus according to claim 5, **characterised in that** the advance of said blade assembly (6) activates said first detector (5), closing a corresponding first electrical circuit and permitting the injection of said first component (2) by means of a press (10).

7. A moulding apparatus according to any of claims 2 to 6, **characterised in that** a device, such as a T-shape arm (11), is arranged in said mould (1) for synchronising the movement of said blade assembly (6) with the activation of a second detector (12), in such a way that when the blade assembly (6) is withdrawn, said second detector (12) closes once the first detector (5) is open.

8. A moulding apparatus according to claim 7, **characterised in that** closure of said second detector (12), which occurs as a passage opens between said first (8) and said second (9) paths, closes a corresponding second electrical circuit, thereby giving consent to the activation of said auxiliary unit (3).

9. A moulding apparatus according to claim 7 or 8, **characterised in that** a third detector (15) is arranged at the point where the plug (14) and the die (13) of said mould meet and is activated when the latter are in contact, closing a third electrical circuit and thereby permitting operation both of the press (10) and of the auxiliary unit (3).

10. A moulding apparatus according to claim 9, **characterised in that** when the plug (14) and the die (13) open, said third detector (15) is activated once again, closing a fourth circuit and resetting the operating cycle of said auxiliary unit (3).

11. A moulding apparatus according to any of claims 7 to 10, **characterised in that** said first (5), second (12) and third detectors 815) are connected to a sixteen-contact (pin) connector (16) located on the outer surface of said mould, thus defining the first, second, third and fourth independent electrical circuits.

12. A moulding apparatus according to claim 11, **characterised in that** a cable (17) is connected to said connector by means of a sixteen-pin plug.

13. A moulding apparatus according to any of the preceding claims, including a main moulding press (10) operatively connected to said mould (1).

## Patentansprüche

1. Formvorrichtung zum Formen von Gegenständen aus Kunststoff, wobei die Formvorrichtung enthält:
- eine Form (1) mit einem Stempelelement (14) und einem Formelement (13), die einen Formhohlraum (8, 9) bilden, wobei die Form mit einer Haupt-Spritzgusspresse (10) verbunden werden kann, um im Hohlraum einen ersten Kunststoffteil (2) zu spritzen, und
- eine zugeordnete Hilfs-Spritzgusseinheit (3), um im Formhohlraum einen zweiten Kunststoffteil (4) getrennt zu spritzen,
wobei die Form zugeordnete bewegbare Elemente (6) aufweist, um die Geometrie des Hohlraums im Bereich (7) zwischen dem Spritzen des ersten Teils (2) und dem Spritzen des zweiten Teils (4) zu verändern,
**dadurch gekennzeichnet, dass** die Form (1) einen oder mehrere Fühler (5, 12, 15) enthält, um die Stellung der bewegbaren Elemente (6) abzutasten, die dazu dienen, um die Form an den Spritzvorgang der Hilfseinheit (3) anzupassen, wobei der eine oder die mehreren Fühler mit einem Kupplungsstück (16) verbunden sind, das mit der Hilfseinheit (3) verbunden werden kann und dazu dient, um eine Zustimmung zur Inbetriebsetzung der Hilfseinheit zu geben.

2. Formvorrichtung gemäß Anspruch 1, **dadurch gekennzeichnet, dass** die Formvorrichtung einen ersten Fühler (5) enthält, der innerhalb der Form (1) angeordnet und der Vorwärtsbewegung eines Messeraufbaus (6) zugeordnet ist, der ein Teil der Form ist.

3. Formvorrichtung gemäß Anspruch 2, **dadurch gekennzeichnet, dass** der Messeraufbau (6) aus einer Einrichtung besteht, die dazu dient, um die Geometrie eines bestimmten Bereichs des Formhohlraums zu verändern, nachdem der erste Teil (2) gespritzt wurde und bevor der zweite Teil (4) mit der Hilfseinheit (3) gespritzt wird.

4. Formvorrichtung gemäß Anspruch 3, **dadurch gekennzeichnet, dass** der Bereich der Form dort angeordnet ist, wo ein erster Kanal (8) für den ersten Teil (2) mit einem zweiten Kanal (9) für den zweiten Teil (4) in Berührung tritt.

5. Formvorrichtung gemäß Anspruch 4, **dadurch gekennzeichnet, dass** die Vorwärtsbewegung des Messeraufbaus (16) die Verbindung zwischen dem ersten Kanal (8) und dem zweiten Kanal (9) unterbricht, so dass der erste Teil (2) nur zu jenem Bereich der Form Zugriff besitzt, der für ihn vorgesehen ist.

6. Formvorrichtung gemäß Anspruch 5, **dadurch gekennzeichnet, dass** das Vorschieben des Messeraufbaus (6) den ersten Fühler (5) aktiviert, der einen entsprechenden ersten Stromkreis schließt und das Spritzen des ersten Teils (2) mit Hilfe einer Presse (10) ermöglicht.

7. Formvorrichtung gemäß irgendeinem der Ansprüche 2 bis 6, **dadurch gekennzeichnet, dass** in der Form (1) eine Einrichtung, beispielsweise ein T-förmiger Arm (11), angeordnet ist, um die Bewegung des Messeraufbaus (6) mit der Aktivierung eines zweiten Fühlers (12) so zu synchronisieren, dass dann, wenn der Messraufbau (6) zurückgezogen wird, der zweite Fühler (12) schließt, wenn der erste Fühler (5) geöffnet ist.

8. Formvorrichtung gemäß Anspruch 7, **dadurch gekennzeichnet, dass** durch das Schließen des zweiten Fühlers (12), das dann auftritt, wenn ein Durchlass zwischen dem ersten Kanal (8) und dem zweiten Kanal (9) geöffnet wird, ein entsprechender Stromkreis geschlossen wird, wodurch eine Zustimmung zur Inbetriebsetzung der Hilfseinheit (3) gegeben wird.

9. Formvorrichtung gemäß Anspruch 7 oder 8, **dadurch gekennzeichnet, dass** ein dritter Fühler (15) an jener Stelle angeordnet ist, an der der Stempel (14) und die Form (13) der Form zusammentreffen, wobei der dritte Fühler aktiviert wird, wenn sich der Stempel und die Form berühren, und einen dritten Stromkreis schließt und dadurch eine Betätigung sowohl der Presse (10) als auch der Hilfseinheit (3) ermöglicht.

10. Formvorrichtung gemäß Anspruch 9, **dadurch gekennzeichnet, dass** dann, wenn der Stempel (14) und die Form (13) geöffnet sind, der dritte Fühler (15) wiederum aktiviert wird, einen vierten Stromkreis schließt und das Arbeitsintervall der Hilfseinheit (3) zurücksetzt.

11. Formvorrichtung gemäß irgendeinem der Ansprüche 7 bis 10, **dadurch gekennzeichnet, dass** der erste Fühler (5), der zweite Fühler (12) und der dritte Fühler (15) mit einem sechzehnpoligen Kupplungsstück (16) verbunden sind, das an der Außenfläche der Form angeordnet ist, wodurch der erste, der zweite, der dritte und der vierte unabhängige Stromkreis gebildet werden.

12. Formvorrichtung gemäß Anspruch 11, **dadurch gekennzeichnet, dass** ein Kabel (17) mit dem Kupplungsstück über einen sechzehnpoligen Stecker verbunden ist.

13. Formvorrichtung gemäß irgendeinem der bisherigen Ansprüche, wobei die Formvorrichtung eine Haupt-Spritzgusspresse (10) aufweist, die betriebsmäßig mit der Form (1) verbunden ist.

## Revendications

1. Appareil de moulage destiné à mouler des articles en matière plastique, comprenant :
- un moule (1) avec un élément de tampon (14) et un élément de matrice (13) définissant une cavité de moulage (8, 9), ledit moule pouvant être relié à une presse principale (10) de moulage par injection destinée à injecter dans ladite cavité un premier composant plastique (2), et
- une unité auxiliaire associée (3) d'injection destinée à l'injection séparée d'un deuxième composant plastique (4) dans ladite cavité de moulage,
ledit moule comprenant des pièces mobiles associées (6) destinées à modifier la géométrie de ladite cavité dans la zone (7) entre l'injection du premier composant (2) et l'injection du deuxième composant (4),
**caractérisé en ce que** ledit moule (1) contient un ou plusieurs détecteurs (5, 12, 15) destinés à détecter la position desdites pièces mobiles (6), pouvant fonctionner pour adapter le moulé pour l'injection par ladite unité auxiliaire (3), ledit ou lesdits plusieurs détecteur(s) étant reliés électriquement à un connecteur (16) qu'on peut interconnecter avec ladite unité auxiliaire (3) et qu'on peut faire fonctionner pour autoriser l'activation de cette dernière.

2. Appareil de moulage selon la revendication 1, **caractérisé en ce qu'**il comprend un premier détecteur (5) disposé à l'intérieur dudit moule (1) et associé avec le mouvement vers l'avant d'un ensemble de lames (6) faisant partie dudit moule.

3. Appareil de moulage selon la revendication 2, caractérisé en ce ledit ensemble de lames (6) est constitué par un mécanisme qu'on peut faire fonctionner pour modifier la géométrie d'une région particulière de la cavité de moulage, après l'injection dudit premier composant (2) et avant l'injection dudit deuxième composant (4) au moyen de ladite unité auxiliaire (3).

4. Appareil de moulage selon la revendication 3, **caractérisé en ce que** ladite région du moule se trouve là où une première voie (8) destinée audit premier composant (2) vient en contact avec une deuxième voie (9) destinée audit deuxième composant (4).

5. Appareil de moulage selon la revendication 4, **caractérisé en ce que** le mouvement vers l'avant dudit ensemble de lames (6) interrompt la connexion entre lesdites première (8) et deuxième (9) voies, de sorte que le premier composant (2) a seulement accès à la région du moule prévue à cet effet.

6. Appareil de moulage selon la revendication 5, **caractérisé en ce que** la progression dudit ensemble de lames (6) active ledit premier détecteur (5), fermant un premier circuit électrique correspondant et permettant l'injection dudit premier composant (2) au moyen d'une presse (10).

7. Appareil de moulage selon l'une quelconque des revendications 2 à 6, **caractérisé en ce qu'**un dispositif, tel qu'un bras en forme de T (11), est disposé dans ledit moule (1) afin de synchroniser le mouvement dudit ensemble de lames (6) avec l'activation d'un deuxième détecteur (12), de telle sorte que quand on ramène en arrière l'ensemble de lames (6), ledit deuxième détecteur (12) se ferme dès que le premier détecteur (5) est ouvert.

8. Appareil de moulage selon la revendication 7, **caractérisé en ce que** la fermeture dudit deuxième détecteur (12), qui se produit quand un passage s'ouvre entre lesdites première (8) et deuxième (9) voies, ferme un deuxième circuit électrique correspondant, autorisant ainsi l'activation de ladite unité auxiliaire (3).

9. Appareil de moulage selon la revendication 7 ou la revendication 8, **caractérisé en ce qu'**un troisième détecteur (15) est disposé au point auquel le tampon (14) et la matrice (13) dudit moule se rencontrent et est activé quand ces derniers sont en contact, fermant un troisième circuit électrique et permettant ainsi de faire fonctionner à la fois la presse (10) et l'unité auxiliaire (3).

10. Appareil de moulage selon la revendication 9, **caractérisé en ce que** quand le tampon (14) et la matrice (13) sont ouverts, on active une fois encore ledit troisième détecteur (15), fermant un quatrième circuit et remettant à zéro le cycle de fonctionnement de ladite unité auxiliaire (3).

11. Appareil de moulage selon l'une quelconque des revendications 7 à 10, **caractérisé en ce que** lesdites premier (5), deuxième (12) et troisième (15) détecteurs sont reliés à un connecteur (16) à seize broches (mâles) placé sur la surface extérieure dudit moule, définissant ainsi les premier, deuxième, troisième et quatrième circuits électriques indépendants.

12. Appareil de moulage selon la revendication 11, **caractérisé en ce qu'**un câble (17) est branché sur ledit connecteur au moyen d'une fiche à 16 broches.

13. Appareil de moulage selon l'une quelconque des revendications précédentes, comprenant une presse de moulage principale (10) reliée en fonctionnement audit moule (1).
